(19) Europäisches Patentamt
European Patent Office
Office européen des brevets

(11) **EP 3 949 099 B1**

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **20711931.4**

(22) Anmeldetag: **17.03.2020**

(51) Internationale Patentklassifikation (IPC):
**H02M 3/335** (2006.01)   **H02M 7/5388** (2007.01)
**H02M 1/34** (2007.01)   **H02M 1/00** (2006.01)

(52) Gemeinsame Patentklassifikation (CPC):
**H02M 7/5388; H02M 3/33573;** H02M 1/0058;
H02M 1/346; H02M 3/01; Y02B 70/10

(86) Internationale Anmeldenummer:
**PCT/EP2020/057204**

(87) Internationale Veröffentlichungsnummer:
**WO 2020/193268 (01.10.2020 Gazette 2020/40)**

(54) **ISOLIERTER DC/DC WANDLER MIT SEKUNDÄRSEITIGEM VOLLBRÜCKENDIODENGLEICHRICHTER UND ASYMMETRISCHEM HILFSKONDENSATOR**

ISOLATED DC/DC CONVERTER WITH SECONDARY SIDE FULLBRIDGE DIODE RECTIFIER INCLUDING AN ASYMMTRIC AUXILIARY CAPACITOR

CONVERTISSEUR CC/CC ISOLÉ AVEC REDRESSEUR SECONDAIRE PONT COMPLET DIODE AVEC UN CONDENSATEUR AUXILIAIRE ASYMMETRIC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2019 DE 102019002098**

(43) Veröffentlichungstag der Anmeldung:
**09.02.2022 Patentblatt 2022/06**

(73) Patentinhaber: **KOSTAL Automobil Elektrik GmbH & Co. KG**
**58513 Lüdenscheid (DE)**

(72) Erfinder: **LUKAS, Ulrich**
**44227 Dortmund (DE)**

(74) Vertreter: **Kerkmann, Detlef**
**Leopold Kostal GmbH & Co. KG**
**An der Bellmerei 10**
**58513 Lüdenscheid (DE)**

(56) Entgegenhaltungen:
EP-A2- 1 033 806        EP-B1- 1 033 806
WO-A2-2014/083080    JP-A- 2006 288 134
US-A1- 2003 165 070

• **DAISUKE TSUKIYAMA ET AL: "A novel type high-efficiency high-frequency-linked full-bridge DC-DC converter operating under secondary-side series resonant principle for high-power PV generation", RENEWABLE ENERGY RESEARCH AND APPLICATIONS (ICRERA), 2012 INTERNATIONAL CONFERENCE ON, IEEE, 11. November 2012 (2012-11-11), Seiten 1-6, XP032342086, DOI: 10.1109/ICRERA.2012.6477251 ISBN: 978-1-4673-2328-4**
• **WENSONG YU ET AL: "A Family of Novel Zero-Voltage and Zero-Current Switching Full Bridge Converters Using Output Voltage Reset for Fuel Cell Application", INDUSTRY APPLICATIONS CONFERENCE, 2007. 42ND IAS ANNUAL MEETING. CONFE RENCE RECORD OF THE 2007 IEEE, IEEE, PI, 1. September 2007 (2007-09-01), Seiten 622-627, XP031145990, ISBN: 978-1-4244-1259-4**

- **WENSONG YU ET AL: "Hybrid Resonant and PWM Converter With High Efficiency and Full Soft-Switching Range", IEEE TRANSACTIONS ON POWER ELECTRONICS, INSTITUTE OF ELECTRICAL AND ELECTRONICS ENGINEERS, USA, Bd. 27, Nr. 12, 1. Dezember 2012 (2012-12-01), Seiten 4925-4933, XP011456275, ISSN: 0885-8993, DOI: 10.1109/TPEL.2012.2192293**
- **HUBER L ET AL: "Performance Evaluation of Bridgeless PFC Boost Rectifiers", IEEE TRANSACTIONS ON POWER ELECTRONICS, INSTITUTE OF ELECTRICAL AND ELECTRONICS ENGINEERS, USA, vol. 23, no. 3, 1 May 2008 (2008-05-01), pages 1381-1390, XP011207115, ISSN: 0885-8993**
- **JIANG Y ED - INSTITUTE OF ELECTRICAL AND ELECTRONICS ENGINEERS: "HIGH EFFICIENCY BOOST CONVERTERS FOR WIDE RANGE SINGLE-PHASE AC INPUT POWER FACTOR CORRECTION", 20TH INTERNATIONAL TELECOMMUNICATIONS ENERGY CONFERENCE. INTELEC '98. SAN FRANCISCO, CA, OCT. 4 - 8, 1998; [INTELEC. INTERNATIONAL TELECOMMUNICATIONS ENERGY CONFERENCE], NEW YORK, NY : IEEE, US, 4 October 1998 (1998-10-04), pages 603-606, XP000896363, ISBN: 978-0-7803-5070-0**

**Beschreibung**

Die vorliegende Erfindung betrifft einen Spannungswandler für Gleichstrom mit einer Schaltungsbrücke, umfassend einen ersten, zweiten, dritten und vierten Leistungsschalter, die jeweils einen Steueranschluss und jeweils eine zwischen zwei Leistungsanschlüssen verlaufende Laststrecke aufweisen, wobei die Laststrecken des ersten und zweiten Leistungsschalters an einem ersten Schaltungsknoten verbunden und die Laststrecken des dritten und vierten Leistungsschalters an einem zweiten Schaltungsknoten verbunden und jeweils in Reihe zwischen den Klemmen für eine Eingangsgleichspannung geschaltet sind, und mit einem Transformator, dessen Primärwicklung mit den ersten und zweiten Schaltungsknoten verbunden ist, und dessen Sekundärwicklung eine Vollbrückengleichrichteranordnung nachgeschaltet ist.

Spannungswandler für Gleichstrom der hier angesprochenen Art werden auch als Vollbrückenwandler bezeichnet und dienen dazu, eine elektrische Gleichspannung in eine höhere oder niedrigere Gleichspannung umzuwandeln. Sie kommen beispielsweise bei Anwendungen im Bereich von Schweißgeräten zum Einsatz. Dabei wird eine netzseitige Eingangswechselspannung zunächst mit Hilfe eines Gleichrichters in eine Gleichspannung umgewandelt, die mit Hilfe von Kondensatoren geglättet und dem Spannungswandler als Eingangsspannung zugeführt wird.

Das Arbeitsprinzip dieser Spannungswandler besteht darin, dass, durch ein getaktetes Öffnen und Schließen elektronischer Leistungsschalter, der Ausgang des durch diese gebildeten Wechselrichters mit unterschiedlichen Potentialen verbunden und so eine Wechselspannung gewünschter Frequenz erzeugt wird. Durch den nachgeschalteten Transformator wird diese Wechselspannung auf den gewünschten Spannungswert transformiert und in einer Vollbrückengleichrichteranordnung wieder gleichgerichtet. Durch die Steuerung der Einschaltdauer der Leistungsschalter und eine Mittelwertbildung des gleichgerichteten Ausgangsstromes oder der gleichgerichteten Ausgangsspannung erlaubt dies eine Leistungsübertragung mit in weiten Bereichen einstellbarem Übersetzungsverhältnis zwischen Ein- und Ausgangsgleichspannung bzw. zwischen den Gleichströmen.

Zur Glättung der geschalteten Stromform ist bei diesen Spannungswandlern eine Filterschaltung bestehend aus mindestens einer Glättungs- oder Speicherdrossel erforderlich, während die Spannung in der Regel durch Kondensatoren parallel zu den Ein- und Ausgangsklemmen geglättet wird.

Die DE 102 27 832 C1 zeigt einen Spannungswandler für Gleichstrom gemäß dem Oberbegriff des Patentanspruchs 1. Bei dem dort gezeigten Vollbrückenwandler sind die vier zur Bildung der Schaltungsbrücke verwendeten Leistungsschalter alle als MOSFETs ausgeführt.

Ein anderer gattungsgemäßer Spannungswandler ist aus der DE 10 2012 023 425 A1 bekannt. Eine Besonderheit des in diesem Dokument beschriebenen Spannungswandlers besteht darin, dass zur Erzielung eines hohen Wirkungsgrades ein asymmetrischer Schaltungsaufbau und eine asymmetrische Betriebsweise verwendet werden. Dieser Spannungswandler ermöglicht dadurch eine wesentliche Eliminierung von Schaltverlusten in den Leistungsschaltern.

Dabei ist es vorgesehen, dass zwei der Schalter auf der Primärseite im stromlosen Zustand oder bei nur geringem Reststrom geschaltet werden, während die anderen beiden Schalter in einem zunächst spannungslosen Zustand bei maximalem Stromfluss geschaltet werden. Die stromlos schaltenden Schalter sind vorzugsweise IGBTs, während die spannungslos schaltenden Schalter vorteilhaft durch MOSFETs ausgeführt werden.

Zur Erzielung eines nahezu vollständig spannungslosen Schaltvorganges der verwendeten MOSFETs wird die Spannungsanstiegsrate beim Abschalten des Stromflusses schaltungstechnisch auf einen sehr geringen Wert begrenzt, so dass der Strom sehr viel schneller sinkt als die Spannung ansteigt. Dafür ist es vorteilhaft möglich, eine parallel zu dem jeweiligen MOSFET geschaltete Kapazität zu verwenden, die die grundsätzlich vorhandene Ausgangskapazität des MOSFETs funktional ergänzt. Diese Kapazität kann durch einen oder mehrere Kondensatoren gebildet werden oder durch Aufbau- und Schaltungskapazitäten.

Eine übliche Betriebsart eines solchen Spannungswandlers ist entsprechend dem Stand der Technik der diskontinuierliche Modus, der auch als Lückbetrieb bezeichnet wird. Er bedeutet, dass der Strom in der Speicherdrossel innerhalb eines Schaltzyklus bis auf null zurückgeht. Der Nulldurchgang erlaubt es, die Speicherdrossel funktional gleichwertig im Wechselstrompfad in Reihe zum Leistungstransformator anzuordnen, anstatt auf der Eingangs- oder Ausgangsseite in Serie zum Gleichstrompfad.

Für eine zeitlich nur langsam veränderliche Eingangs- und Ausgangsspannung bedeutet dies, dass die Höhe von Spannungs-Überschwingvorgängen an sämtlichen Leistungsschaltern auf die Höhe der Gleichspannung begrenzt wird, was die Spannungsbelastung der Bauteile um den Faktor zwei reduzieren kann.

Für die Speicherdrossel im Leistungsteil bedeutet dies, dass diese in einer Einheit mit dem Leistungstransformator konstruiert werden kann, zum Beispiel als Streufeldtransformator.

Diese Betriebsart weist allerdings folgenden Nachteil auf. Jedes Mal, wenn der Strom in der Speicherdrossel durch Null geht, wird eine gedämpfte Schwingung ("Klingeln") in dem Schwingkreis angeregt, der sich aus der Spuleninduktivität in Verbindung mit den parasitären Kapazitäten von Spule, Transformator, Dioden, Transistoren und der Aufbautechnik ergibt.

Das Problem dabei ist der Energieinhalt dieses Schwingkreises. In der Pulspause der Leistungsübertragung klingt die Oszillation ab und verursacht eine Erwärmung des Transformators, der Drossel und damit verbundener Schaltungskomponenten. Die Schwingung verursacht zudem Störemissionen und kann gegebenenfalls sogar die Schaltung schädigen oder zerstören.

Es stellte sich die Aufgabe, einen Spannungswandler zu schaffen, bei dem dieses Problem auf einfache und kostengünstige Weise gelöst oder zumindest deutlich verringert ist und bei dem zudem der Leistungsfaktor des Gleichrichters verbessert ist.

Diese Aufgabe wird durch einen Spannungswandler gemäß Anspruch 1 gelöst.

Die erfindungsgemäße Lösung sieht mit einem Kondensator ein zusätzliches Bauteil vor, das die Symmetrie der Vollbrückengleichrichteranordnung aufhebt und das zudem verhältnismäßig kostengünstig ist.

Besonders vorteilhaft ist dabei ist, dass diese einfache Maßnahme zugleich den Wirkungsgrad des Spannungswandlers verbessern kann.

Vorteilhaft ist auch, dass die Wirkung dieser Zusatzschaltung durch nur ein weiteres Schaltelement bedarfsweise ein- und ausgeschaltet werden kann. Durch Ausnutzen eines Resonanzeffektes bei eingeschaltetem Schalter erlaubt dies eine Vergrößerung des Einstellbereiches des Übersetzungsverhältnisses zwischen Ein- und Ausgangsspannung.

Die asymmetrische Ausgestaltung des Gleichrichters beinhaltet eine Mischbestückung mit schnellen Gleichrichterbauteilen, d.h.

Ultrafast- oder Schottky-Dioden nur für die schnelle Gleichrichterseite, während die Komplementärseite mit einfachen Dioden als langsam schaltenden und verlustoptimierten Bauteilen ausgeführt ist.

Weitere vorteilhafte Ausgestaltungen und Weiterbildungen des erfindungsgemäßen Spannungswandlers ergeben sich aus den Unteransprüchen und werden anhand der Zeichnung erläutert.

Aus den beiden Dokumenten DAISUKE TSUKIYAMA ET AL: 'A novel type high-efficiency high-frequency-linked full-bridge DC-DC converter operating under secondary-side series resonant principle for high-power PV generation", RE-NEWABLE ENERGY RESEARCH AND APPLICATIONS (ICRERA), 2012 INTERNATIONAL CONFERENCE ON, IEEE, 11. November 2012 (2012-11-11), Seiten 1-6, XP032342086, DOI: 10.1109/ICRERA.2012.6477251, ISBN: 978-1-4673-2328-4, und WENSONG YU ET AL: "A Family of Novel Zero-Voltage and Zero-Current Switching Full Bridge Converters Using Output Voltage Reset for Fuel Cell Application", INDUSTRY APPLICATIONS CONFERENCE, 2007. 42ND IAS ANNUAL MEETING CONFERENCE RECORD OF THE 2007 EEE, IEEE PI, 1. September 2007 (2007-09-01), Seiten 622-627, XP031145990, ISBN: 978-1-4244-1259-4 sind jeweils gattungsgemäße Spannungswandler bekannt, bei denen ein Kondensator an einen Gleichrichterzweig einer Vollbrückengleichrichteranordnung asymmetrisch angeschaltet ist, wobei der Kondensator allerdings nicht den mittleren Knoten des einen Gleichrichterzweigs mit dem Gleichstromausgang der Vollbrückengleichrichteranordnung verbindet.

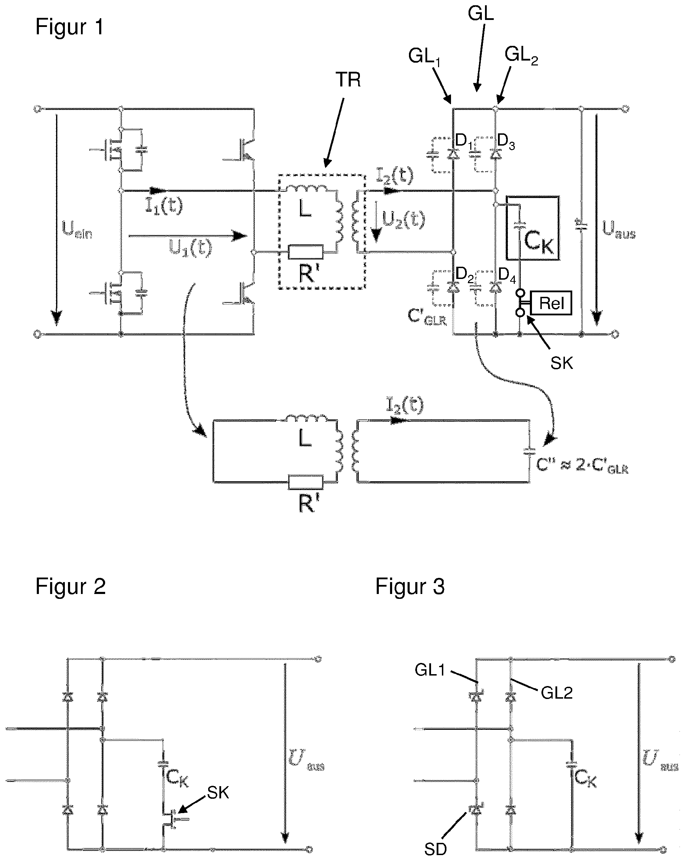

Das Dokuments WENSONG YU ET AL: "Hybrid Resonant and PWM Converter With High Efficiency and Full Soft-Switching Range", TRANSACTIONS ON POWER ELECTRONICS, INSTITUTE OF ELECTRICAL AND ELECTRONICS ENGINEERS, USA. Bd. 27, Nr. 12, 1. Dezember 2012 (2012-12-01) Seiten 4925-4933, XP011456275, ISSN: 0885-8993, DOI: 10.1109/TPEL.2012.2192293 zeigt in der Figur 2 einen Spannungswandler mit einer primären Schalterbrücke, bei der ein Zweig durch MOSFETs und der andere Zweig durch IGBTs ausgebildet ist.

Aus den Patentdokumenten EP 1 033 806 A2, JP 2006 288134 A und US 2003/165070 A1 sind jeweils Spannungsversorgungsschaltungen bekannt, die eine Brückengleichrichteranordnung aufweisen, an die ein Kondensator genau parallel zu einer einzelnen Diode der Brückengleichrichteranordnung anliegt oder über einen Schalter anschaltbar ist.

HUBER L ET AL: "Performance Evaluation of Bridgeless PFC Boost Rectifiers",IEEE TRANSACTIONS ON POWER ELECTRONICS, INSTITUTE OF ELECTRICAL AND ELECTRONICS ENGINEERS, USA, Bd. 23, Nr. 3, 1. Mai 2008 (2008-05-01), Seiten 1381-1390, XP011207115,ISSN: 0885-8993 offenbart einen in einem PFC eingesetzten Vollbrückengleichrichter dessen einer Zweig aus schnellen und dessen anderer Zweig aus langsamen Dioden aufgebaut sind.

JIANG Y ED - INSTITUTE OF ELECTRICAL AND ELECTRONICS ENGINEERS: "HIGH EFFICIENCY BOOST CONVERTERS FOR WIDE RANGE SINGLE-PHASE AC INPUT POWER FACTOR CORRECTION",20TH INTERNATIONAL TELECOMMUNICATIONS ENERGY CONFERENCE. INTELEC '98. SAN FRANCISCO, CA, OCT. 4 - 8, 1998; [INTELEC. INTERNATIONAL TELECOMMUNICATIONS ENERGY CONFERENCE], NEW YORK, NY : IEEE, US, 4. Oktober 1998 (1998-10-04), Seiten 603-606, XP000896363,ISBN: 978-0-7803-5070-0 offenbart einen AC/DC Boost Vollbrückengleichrichter, dessen erster Zweig aus schnellen Dioden und dessen zweiter Zweig aus langsamen Dioden aufgebaut sind. Der Mittelpunkt des zweiten Zweigs ist mittels eines ersten Kondensators mit dem positiven Ausgang und mittels eines zweiten Kondensators mit dem negativen Ausgang des Gleichrichters verbunden.

Es zeigen:

Figur 1 ein Prinzipschaltbild eines Spannungswandlers,
Figur 2 eine Variante davon mit in Stufen umschaltbaren Ausgangsspannungsbereichen und MOSFET als Umschaltelement,
Figur 3 die erfindungsmäßige Ausgestaltung des Gleichrichters eines in Abbildung 1 gezeigten Spannungswandlers mit gemischter Bestückung unterschiedlich optimierter Bauteile im Gleichrichter,
Figur 4 ein Prinzipschaltbild eines bekannten Spannungswandlers,
Figur 5 eine Skizze zur Erläuterung der Problemstellung anhand des bekannten Spannungswandlers,
Figur 6 ein Diagramm, das den Prinzipverlauf von Strom und Spannung beim Betrieb des Spannungswandlers nach Figur 4 zeigt, mit dem Problem der Oszillation in der Pulspause,
Figur 7 den Prinzipverlauf von Strom und Spannung beim Betrieb des Spannungswandlers gemäß der Figur 1.

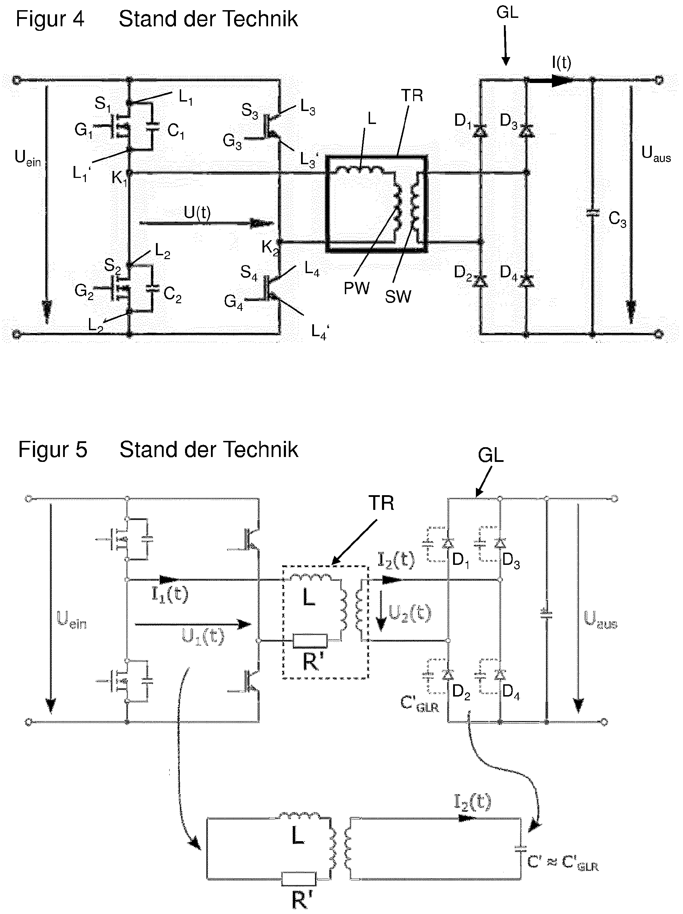

Das Funktionsprinzip eines gattungsgemäßen Schaltwandlers nach dem Stand der Technik, welches ausführlicher in der deutschen Offenlegungsschrift DE 10 2012 023 425 A1 beschrieben ist, sei nachfolgend kurz anhand der Figur 4 dargestellt und erläutert.

Der in der Figur 4 in einem Prinzipschaltbild dargestellte Spannungswandler wird an seiner Eingangsseite mit einer Eingangsgleichspannung $U_{ein}$ versorgt. Eine Schaltungsbrücke als zentrales Element des Spannungswandlers umfasst vier Leistungsschalter $S_1$, $S_2$, $S_3$, $S_4$. Diese vier Leistungsschalter $S_1$, $S_2$, $S_3$, $S_4$ weisen jeweils einen Steueranschluss $G_1$, $G_2$, $G_3$, $G_4$ und jeweils eine zwischen zwei Leistungsanschlüssen $L_1$, $L_1'$; $L_2$, $L_2'$; $L_3$, $L_3'$; $L_4$, $L_4'$ verlaufende Laststrecke auf. Der erste und der zweite Leistungsschalter $S_1$, $S_2$ sind durch MOSFETs gebildet, deren Laststrecken an einem ersten Schaltungsknoten $K_1$ verbunden und in Reihe zwischen den Klemmen für die Eingangsgleichspannung $U_{ein}$ geschaltet sind. Parallel zu den einzelnen MOSFETs sind dabei jeweils Kapazitäten $C_1$, $C_2$ geschaltet. Der dritte und der vierte Leistungsschalter $S_3$, $S_4$ sind durch IGBTs gebildet. Deren Laststrecken sind an einem zweiten Schaltungsknoten $K_2$ verbunden und ebenfalls in Reihe zwischen den Klemmen für die Eingangsgleichspannung $U_{ein}$ geschaltet.

Die ersten und zweiten Schaltungsknoten $K_1$, $K_2$ der Schaltungsbrücke sind mit der Primärwicklung PW eines Transformators TR verbunden, dessen Sekundärwicklung SW eine durch vier Dioden $D_1$, $D_2$, $D_3$, $D_4$ gebildete Vollbrückengleichrichteranordnung GL nachgeschaltet ist. Die am Ausgang dieser Vollbrückengleichrichteranordnung GL anliegende Ausgangsgleichspannung $U_{aus}$ wird durch einen Glättungskondensator $C_3$ geglättet. Im Schaltbild nicht dargestellt sind elektrische Komponenten zur getakteten Ansteuerung der vier Leistungsschalter $S_1$, $S_2$, $S_3$, $S_4$.

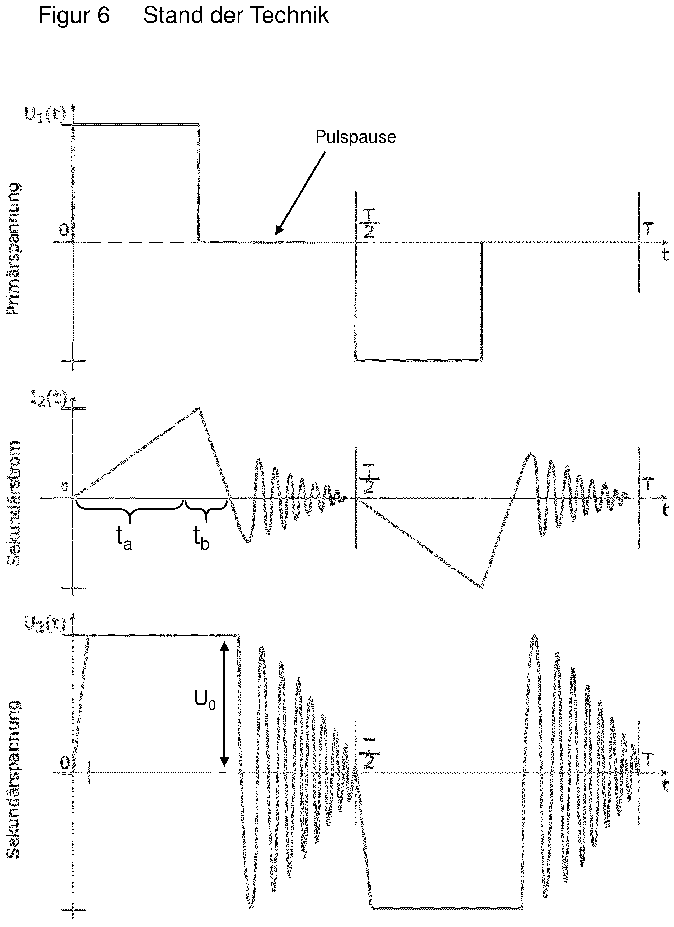

Die Leistungsübertragung erfolgt über einen im Wesentlichen dreieckförmigen Ausgangsstrom $I_2(t)$ des Transformators TR bei einer in etwa rechteckförmigen Ausgangsspannung $U_2(t)$, wie aus dem mittleren und dem unteren Diagramm in der Figur 6 ersichtlich ist.

Typisch ist dabei der sogenannte Lückbetrieb des ein- und ausgangsseitigen Schaltungsteiles mit einer Pulspause zwischen den Phasen unterschiedlicher Strompolarität in den Wicklungen des Transformators TR (Figur 6, oben). Während der Pulspause ist die Primärspannung $U_1(t)$ null oder mittelwertfrei und es wird keine Nutzleistung auf die Sekundärseite übertragen.

Durch den Lück- oder Grenzbetrieb und die dreieckartige Stromform ergeben sich Vorteile bei der Verwendung von Silizium-PN-Sperrschichtdioden im ausgangsseitigen Gleichrichterteil der Wandlerschaltung.

Als Merkmal des Arbeitsprinzips ergibt die dreieckartige Stromform auf natürliche Weise den stromlosen Zustand während des Umschaltens der durch IGBTs gebildeten dritten und vierten Leistungsschalter $S_3$, $S_4$, während die Ansteuerung der durch MOSFETs gebildeten ersten und zweiten Leistungsschalter $S_1$, $S_2$ den Zeitpunkt des Erreichens des Dreieckstrom-Spitzenwertes definiert.

Auf eine bei vielen Gegentaktvollbrückenwandlern im Ausgangsteil eingesetzte Gleichstromglättungsdrossel kann hier verzichtet werden. Der dreieckförmige Wechselstrom wird nach der Gleichrichtung in der Vollbrückengleichrichteranordnung durch den Glättungskondensator $C_3$ rein kapazitiv gestützt. Eine verbleibende Restwelligkeit kann durch eine nach Bauteilwert und Baugröße klein zu bemessende, nachgeschaltete Filterstufe entfernt werden.

Die Erzeugung des dreieckförmigen Ausgangsstrom $I_2(t)$ erfolgt in der Schaltung, indem ein innerhalb des hochfrequenten Betriebszyklus konstanter Rest der rechteckförmigen Ausgangsspannung $U_2(t)$ der Halbleitervollbrücke einen linear ansteigenden Stromfluss in der Schaltkreisinduktivität L hervorruft. Der Rest der rechteckförmigen Ausgangsspannung $U_2(t)$ hat als Betrag die Differenz der Eingangsgleichspannung $U_{ein}$ und der mit dem Windungszahlverhältnis des Transformators TR transformierten Ausgangsgleichspannung $U_{aus}$. Das Vorzeichen ändert sich zweimal innerhalb eines vollständigen Arbeitszyklus T.

Nach Anstieg des Ausgangsstrom $I_2(t)$ auf den Dreieckspitzenwert während des Zeitraums $t_a$ erfolgt während des Zeitraums $t_b$ ein linearer Abfall auf null, während an der Schaltkreisinduktivität L allein die transformierte Ausgangsspannung mit umgekehrter Polarität anliegt (Fig. 6, Mitte).

Während der beiden fallenden Flanken des Betrages des Dreieckstromes $I_2(t)$ muss je einer der durch MOSFETs gebildeten ersten und zweiten Leistungsschalter $S_1$, $S_2$ den Strom in umgekehrter Richtung gegenüber der Flussrichtung durch das Bauteil in der Gegenphase bei ansteigender Dreieckflanke führen. Dazu werden die integrierten Substratdiodenstrecken der MOSFETs oder separate Inversdioden verwendet. Bei MOSFETs verringert sich der Verlustspannungsabfall an den Substratdiodenstrecken, wenn das Ansteuersignal das Bauteil während dieser Zeit einschaltet (Synchrongleichrichtung).

Vorteilhaft ist bei der dargestellten Schaltung, dass die Schaltkreisinduktivität L, anteilig oder vollständig, bereits in Form der Streuinduktivität der Anordnung aus Ein- und Ausgangswicklung des Transformators TR enthalten ist. Durch Ausführung als Streufeldtransformator kann ein separates Bauteil entfallen. Ein weiterer Vorteil der dreieckartigen Stromform im Transformator TR ist der geringe Oberwellengehalt, da die harmonischen Komponenten der Fourier-Reihenentwicklung mit dem Quadrat der Ordnungszahl abnehmen, im Gegensatz zum rechteckförmigen Stromfluss der konventionellen Gegentakt-PWM-Wandlerschaltung, bei dem die Amplituden der Oberschwingungsanteile nur linear mit der Ordnungszahl abnehmen. Dadurch sinkt die Verlustleistung durch Wirbelstrom und Stromverdrängung (Proximity-Effekt) in der Kupferwicklung erheblich.

Die zur Erfindung führende Problemstellung sei hier anhand von Figur 5 in Verbindung mit Figur 6 erläutert. Dazu zeigt die Figur 5 eine leicht abgewandelte Darstellung der in der Figur 4 gezeigten Schaltung. Darin sind gleichwirkende Bauteile mit gleichen Bezugszeichen wie in der Figur 4 bezeichnet.

Für den Zeitraum der Pulspause kann die Schaltung der Figur 5 als Modell zu dem im unteren Teil derselben Figur dargestellten Ersatzschaltbild vereinfacht werden, wobei L die Schaltkreisinduktivität und R' den Verlust- bzw. Dämpfungswiderstand des Transformators TR darstellt.

Es sei zunächst angenommen, dass sich die Vollbrückengleichrichteranordnung GL bei voller Ausgangsgleichspannung $U_{aus}$ im Leerlauf befindet.

Auf der Primärseite des Transformators TR wirkt die aus den Leistungsschaltern $S_1$, $S_2$, $S_3$, $S_4$ bestehende Schaltungsbrücke in der Impulspause der Leistungsübertragung wie ein Kurzschluss.

Die die Vollbrückengleichrichteranordnung GL ausbildenden Dioden $D_1$, $D_2$, $D_3$, $D_4$ sind gesperrt. Die parasitären Kapazitäten $C'_{GLR}$ der Dioden $D_1$, $D_2$, $D_3$, $D_4$ bilden zusammen als Gesamtkapazität C' mit der Schaltkreisinduktivität L des Transformators TR einen Schwingkreis aus.

Das Problem ist der Energieinhalt dieses Schwingkreises. Im Anschluss an jede Halbwelle der Leistungsübertragung wird hier durch den Schaltvorgang der Dioden $D_1$, $D_2$, $D_3$, $D_4$ im Gleichrichter GL eine Oszillation angeregt. In der Pulspause klingt die Oszillation gedämpft ab und verursacht dabei eine Erwärmung des Transformators TR und gegebenenfalls weiterer mit dem Transformator TR verbundener Bauteile.

Der Energieinhalt $E_0$ ist einfach zu berechnen, weil der Anfangswert der Schwingung vom Rechteckplateau der Ausgangsspannung $U_{aus}$ vorgegeben ist. Bei Vernachlässigung der Dioden-Durchlassspannung ist (Fig. 6, unten):

$$U_0 = U_2(0) = U_{aus} \quad \text{sowie} \quad E_0 = \tfrac{1}{2} \cdot C' \cdot U_0^2$$

Die Energie $E_0$ am Anfang der Oszillation hängt somit nur von der effektiven, parasitären Kapazität C' und von der Höhe der Ausgangsspannung $U_{aus}$ ab.

Die Kapazität C' wird in dieser Modelldarstellung für den gesamten Gleichrichter GL verwendet; sie vereint sämtliche physikalischen Bauteil- und Aufbaueigenschaften des Gleichrichters mit den Dioden, des Leistungstransformators und der Leitungen, die das Zeitverhalten des Schaltvorganges des Gleichrichters bestimmen.

Die einzelnen Bauteilkapazitäten enthalten beispielsweise bei den Dioden $D_1$, $D_2$, $D_3$, $D_4$ die Sperrschicht-, Gehäuse- und Diffusionskapazitäten (Sperrverzugszeit) und beim Transformator TR die Kapazität des Wicklungsaufbaus gegenüber dem Gehäuse. Leitungen sind insbesondere die Leiterbahnen auf einer Leiterplatte.

Im Ersatzschaltbild ist die gesamte Kapazität C' auf vier identische Diodenkapazitäten $C'_{GLR}$ der einzelnen Dioden $D_1$, $D_2$, $D_3$, $D_4$ aufgeteilt. Der Wert $C'_{GLR} \approx C'$ ergibt sich aus der Symmetrie der Vollbrückenanordnung, in deren Wechselstrom-Ersatzschaltbild jeweils zwei Kapazitäten $C'_{GLR}$ in Reihe und weitere zwei Kapazitäten parallel geschaltet sind.

Bei kleinen Ausgangsströmen und bei Verringerung der Schaltfrequenz wird die Pulspause relativ lang und die Oszillation des Ausgangskreises klingt nach jedem Schaltvorgang nahezu vollständig ab; dadurch ergibt sich ein vollständiger Verlust der Anfangsenergie. Jede Erhöhung der parasitären Kapazität C' bedeutet einen Wirkungsgradverlust. Das Optimierungsziel der Schaltung ist damit in diesem Fall eine absolute Minimierung von C'.

Bei hohen Ausgangsströmen $I_2(t)$ ist die Pulspause klein und die Schwingung klingt nicht vollständig ab. In diesem Fall kann auch die Verringerung der Eigenfrequenz durch die Wahl einer absichtlich höheren parasitären Kapazität C' vorteilhaft sein: durch die stark nichtlinear mit der Frequenz steigenden Wirbelstromverluste des Transformators TR (Proximity-Effekt) kann das Verlustminimum bei Volllast bei einem vergrößerten C' liegen. Das ist allerdings nur im Sinne einer Kompromisslösung vorteilhaft.

Es wird hiermit die Anordnung nur eines zusätzlichen Bauteils im Gleichrichterteil des Spannungswandlers vorgeschlagen, um die Probleme der parasitären Schwingung bei Betrieb des gezeigten Spannungswandlers im diskontinuierlichen Modus zu verringern und gleichzeitig eine Optimierung der Funktion mit einer Erweiterung des Arbeitsbereiches durch einen steuerbaren Resonanzeffekt zu bewirken.

Dabei ist es wesentlich, dass die Symmetrie der Gleichrichterschaltung durch das zusätzliche Bauteil aufgehoben wird.

Dazu wird der Gleichrichterzweig $GL_2$ mit einem Kondensator $C_K$ beschaltet, der den mittleren Knoten des Gleichrichterzweigs $GL_2$ mit dem

Gleichstromausgang des Gleichrichters GL verbindet. Im Schaltbild von Figur 1 liegt dieser Kondensator $C_K$ zwischen der Anode der Diode $D_3$ und der Anode der Diode $D_4$ und damit an der negativen Leitung der Ausgangsspannung $U_{aus}$. Nicht dargestellt aber gleichwertig können auch die Kathoden der Dioden $D_3$ und $D_4$ beziehungsweise die positive Ausgangsleitung für den zweiten Anschluss des Kondensators $C_K$ gewählt werden, sofern die Ausgangsspannung $U_{aus}$ konstant ist und somit keinen Einfluss auf die Dynamik des Schaltvorganges hat.

Die in der Figur 1 dargestellte Anschaltung des Kondensators $C_K$ über den Schaltkontakt SK eines Schaltelements Rel ist aus weiter unten erläuterten Gründen zwar besonders vorteilhaft, aber optional.

Wenn die Kapazität des Kondensators $C_K$ deutlich größer gewählt wird als die parasitären Diodenkapazitäten $C'_{GLR}$, also

$$C_K \gg C'_{GLR},$$

gilt, wirkt der somit geänderte Eingangsknoten des Gleichrichters GL für hohe Frequenzen als Kurzschluss. Im Wechselstrom-Ersatzschaltbild am Eingangtor des Gleichrichters GL entfällt die zweite in Reihe geschaltete, identisch hohe Kapazität, und es ergibt sich nun eine gegenüber dem ursprünglichen Wert näherungsweise verdoppelte Gesamtkapazität C":

$$C'' \approx 2 \cdot C'_{GLR}.$$

Der Kondensator $C_K$ nutzt durch seine asymmetrische Anordnung im Ausgangskreis der Vollbrückengleichrichteranordnung GL die nichtlineare Kennlinie der vorhandenen, ungesteuerten Dioden $D_1$, $D_2$, $D_3$, $D_4$ für eine Spannungsbegrenzung im Leerlauf und für eine Energierückgewinnung.

Der Gleichrichterzweig $GL_2$ mit dem Kondensator $C_K$ bildet die langsam schaltende Hälfte einer nun asymmetrischen Gleichrichterschaltung, während der wesentliche Anteil der Dynamik des Spannungsverlaufes in dem schnellen Gleichrichterzweig $GL_1$ auftritt.

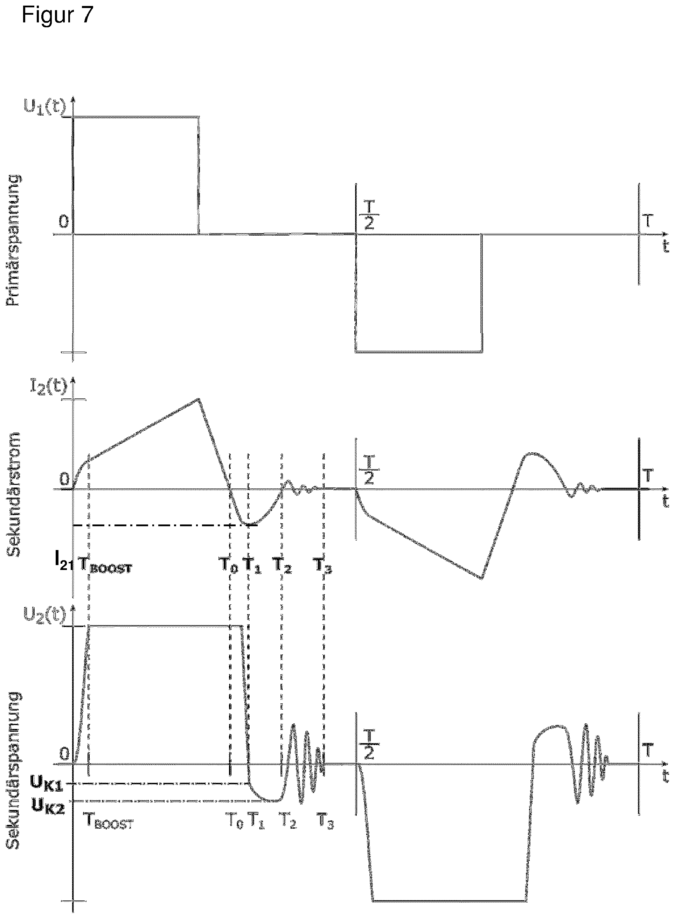

Die Energie aus dem Umladevorgang des schnellen Gleichrichterzweigs $GL_1$ mit der Kapazität $2 \cdot C'_{GLR}$ wird in drei Phasen $T_0 \rightarrow T_1 \rightarrow T_2 \rightarrow T_3$ abgebaut, wobei $T_0$, $T_1$, $T_2$, $T_3$ die Anfangs- bzw. Endzeitpunkte der aufeinanderfolgenden Phasen bezeichnen (Figur 7).

Dabei wird die Energie des parasitären Schwingkreises nicht gedämpft, sondern in den Kondensator $C_K$ geladen und während der Pulspause annähernd verlustfrei gespeichert. Es findet zwar weiterhin anschließend ein parasitäres Nachschwingen an den Eingangsklemmen des Gleichrichterteils $GL_2$ statt, jedoch mit stark reduzierter Amplitude und geringerer Frequenz.

Durch die Ansteuerung der Leistungsschalter $S_1$, $S_2$, $S_3$ und $S_4$ auf der Primärseite erzwungen, ist die Spannung am Eingang des Transformators TR für den Zeitraum der Sperrdauer der sekundärseitigen Dioden $D_1$, $D_2$, $D_3$, $D_4$ nahezu null Volt, so dass im Ersatzschaltbild nur die Induktivität L mit einem primärseitigen Kurzschluss am Schwingvorgang beteiligt ist.

In der ersten Phase $T_0 < t < T_1$, siehe Figur 7, findet der Übergang vom leitenden in den vollständig gesperrten Zustand im schnellen Gleichrichterzweig $GL_1$ statt:
Nachdem der dreieckförmige Nutzstrom bis auf null abgeklungen ist, benötigen die Gleichrichterdioden $D_1$ oder $D_2$ eine bauteil-, aufbau- und stromabhängige Ladungsmenge in Sperrrichtung, bis der Leitvorgang vollständig beendet ist und Sperrspannung aufgebaut wird. Dadurch erreicht der Sekundärstrom $I_2(t)$, bezogen auf die Flussrichtung der vormals leitenden Diode, negative Werte. Der negative Stromfluss bewirkt eine Umladung der Kapazitäten $C'_{GLR}$ des Gleichrichterzweigs $GL_1$ um den Betrag der maximalen Sperrspannung, näherungsweise gleich der Ausgangsspannung $U_{aus}$.

Der Stromfluss während dieser ersten Phase lädt gleichzeitig den Kondensator $C_K$ auf. Da $C_K$ wesentlich größer als die parasitäre Kapazität $C'_{GLR}$ gewählt wird, erreicht hier die Momentanspannung über $C_K$ im Vergleich mit der maximalen Sperrspannung vergleichsweise nur sehr geringe Werte. Die maximal negative Stromamplitude ist demnach dann erreicht, wenn die vormals leitende Diode im schnellen Gleichrichterzweig vollständig sperrt und der negative Strom aus dem Transformator TR auf die komplementäre Diode kommutiert. Das negative Strommaximum ist hier mit $I_2(T_1) = I_{21}$ bezeichnet.

Die zweite Phase $T_1 < t < T_2$ beginnt per Definition mit dem Strommaximum bei $I_2(t) = I_{21}$, sobald die Ausgangsspannung $U_2(t)$ des Transformators TR den Wert Null durchläuft und der Kondensator $C_K$ einen geringen Spannungswert $U_{K1}$ erreicht hat. Die in der Induktivität L gespeicherte Energie lädt daraufhin bei absolut sinkendem Ausgangsstrom $I_2(t)$ den Kondensator $C_K$ weiter auf, bis dort näherungsweise die doppelte Energie beim Spannungswert $U_{K2} = \sqrt{2} \cdot U_{K1}$ erreicht ist, wobei $U_{K1}$ und $U_{K2}$ die Spannungen am Kondensator $C_K$ zu den Zeitpunkten $T_1$ und $T_2$ bezeichnet. Für diese Phase leitet die Komplementärdiode im schnellen Gleichrichterzweig $GL_1$.

Die dritte Phase $T_2 < t < T_3$ beginnt mit dem erneuten Stromnulldurchgang von $I_2(t)$. Der schnelle Gleichrichterzweig $GL_1$ oszilliert nun frei mit der Anfangsamplitude $U_{K2}$, gedämpft über den effektiven Verlustwiderstand $R'$.

Ein aus der Erfindung resultierendes wesentliches Merkmal für die Phase ab $T_2$ ist die unsymmetrische Aufteilung der Spannungen im schnellen Gleichrichterzweig $GL_1$ und im langsamen Gleichrichterzweig $GL_2$ wegen $U_{K2} << U_{aus}$.

Die Wahl des Kondensators $C_K$ mit einem wesentlich größeren Wert als $C'_{GLR}$ reduziert durch kapazitive Spannungsteilung den Wert der Anfangsbedingung für die parasitäre Restoszillation des schnellen Gleichrichterzweigs $GL_1$ in der Phase $T_2$ bis $T_3$. Weil gemäß $E = \frac{1}{2} \cdot C \cdot U^2$ die Energie proportional zum Quadrat der Spannungsamplitude sinkt, lässt sich der Energieverlust bei Dämpfung der Restoszillation beliebig senken.

Eine weitere Charakteristik der Schaltungsausführung in der gezeigten Anordnung ist die Anfangsbedingung bei Beginn jedes der nächst folgenden Zyklen der Leistungsübertragung im Zeitraum zwischen $t = 0$ und $t = T_{BOOST}$.

Die Anfangsbedingung ist eine geringe Restspannung von näherungsweise $U_{K2}$ über dem Kondensator $C_K$, wobei der Kondensator $C_K$ bei Beginn jeder Halbwelle der Leistungsübertragung von diesem geringen Absolutwert auf den vollständigen Betrag der Ausgangsspannung $U_{aus}$ einschwingt. Der Einschwingvorgang ist jeweils abgeschlossen zum Zeitpunkt $t = T_{BOOST}$. Der Einschwingvorgang ist durch das mittlere und untere Diagramm der Figur 7 illustriert.

In Verbindung mit der transformierten Induktivität L des Spannungswandlers ist der Effekt dieses regelmäßigen Umschwingvorganges eine Parallelresonanz bezogen auf den Ausgang des Gleichrichters mit der angeschlossenen Last.

Dies bewirkt eine Erhöhung des Anfangswertes für die dreieckförmige Stromübertragung und eine Erhöhung des mittleren Ausgangsstromes (Boost-Effekt).

Besonders vorteilhaft ist, dass der Kondensator $C_K$ und damit der Boost-Effekt in dieser Anordnung abschaltbar oder auswählbar schaltbar ausgeführt werden kann. Mittels eines Schaltkontakts SK eines langsamen und gering belasteten Schaltelements "Rel", das etwa als Relais, Bipolartransistor, IGBT oder MOSFET ausgeführt sein kann, lassen sich so verschiedene Betriebsmodi mit jeweils einer unterschiedlichen Übertragungssteilheit des Spannungswandlers einstellen. Zwei der möglichen Ausführungen des Schaltkontakts SK zeigen die Figur 1 (Relais) und Figur 2 (MOSFET).

In der Anwendung ermöglicht der somit vergrößerte Einstellbereich des Übertragungsverhältnisses beispielsweise, wahlweise oder in Kombination eine wesentliche Bauraumersparnis und/oder eine Reduktion der Transformatormagnetisierung und der Kernverluste und dadurch eine Temperatursenkung.

Die verringerte Schwingungsamplitude im Gleichrichterkreis erlaubt zudem eine Reduktion der elektromagnetischen Störaussendung.

Die erfindungsgemäße Ausführung zeigt die Figur 3. Hier wird vorteilhaft ausgenutzt, dass die asymmetrische Ausgestaltung des Gleichrichters eine Mischbestückung mit schnellen Gleichrichterbauteilen wie beispielsweise Ultrafast- oder Schottky-Dioden SD nur für die schnelle Gleichrichterseite $GL_1$ erlaubt, während die Komplementärseite $GL_2$ mit einfachen Dioden als langsam schaltenden und verlustoptimierten Bauteilen ausgeführt ist.

**Bezugs- und Formelzeichen**

| | |
|---|---|
| $C_1, C_2$ | Kapazitäten |
| $C_3$ | Glättungskondensator |
| $C_K$ | Kondensator |
| $C'$ | Gesamtkapazität (ohne Kondensator $C_K$) |
| $C''$ | Gesamtkapazität (mit Kondensator $C_K$) |
| $C'_{GLR}$ | (parasitäre) Kapazitäten) |
| $D_1, D_2, D_3, D_4$ | Dioden |
| $E_0$ | Energieinhalt (der Oszillation) |
| $G_1, G_2, G_3, G_4$ | Steueranschluss |
| GL | Vollbrückengleichrichteranordnung, Gleichrichter |
| $GL_1$ | (schneller) Gleichrichterzweig |

| | |
|---|---|
| GL$_2$ | (langsamer) Gleichrichterzweig |
| I$_2$(t) | Ausgangsstrom Transformator, Dreieckstrom, Sekundärstrom |
| I$_{21}$ | Stromamplitude (von I$_2$(t) zum Zeitpunkt T$_1$) |
| K$_1$, K$_2$ | Schaltungsknoten |
| L | Schaltkreisinduktivität, Speicherdrossel |
| L$_1$, L$_1$'; L$_2$, L$_2$'; L$_3$, L$_3$'; L$_4$, L$_4$' | Leistungsanschlüsse |
| PW | Primärwicklung |
| R' | Dämpfungswiderstand, Verlustwiderstand |
| Rel | Schaltelement |
| SD | Schottky-Dioden |
| SK | Schaltkontakt |
| SW | Sekundärwicklung |
| S$_1$, S$_2$, S$_3$, S$_4$ | Leistungsschalter |
| T | Arbeitszyklus (Zeitdauer) |
| t | Zeit (Variable) |
| T$_{BOOST}$ | Zeitpunkt (eingeschwungener Zustand) |
| T$_0$, T$_1$, T$_2$, T$_3$ | Zeitpunkte |
| t$_a$, t$_b$ | Zeiträume |
| TR | Transformator mit Schaltkreisinduktivität L |
| U$_{ein}$ | Eingangsgleichspannung |
| U$_{aus}$ | Ausgangsgleichspannung |
| U$_1$(t) | Primärspannung (am Transformator TR) |
| U$_2$(t) | Sekundärspannung (am Transformator TR) |
| U$_0$ | Spannung in Phase T$_0$, Anfangsbedingung |
| U$_{K1}$ | Spannung an Kondensator C$_K$ zum Zeitpunkt T$_1$ |
| U$_{K2}$ | Spannung an Kondensator C$_K$ zum Zeitpunkt T$_2$ |

**Patentansprüche**

1. Spannungswandler für Gleichstrom mit einer Schaltungsbrücke, umfassend einen ersten, zweiten, dritten und vierten Leistungsschalter (S$_1$, S$_2$, S$_3$, S$_4$), die jeweils einen Steueranschluss (G$_1$, G$_2$, G$_3$, G$_4$ ) und jeweils eine zwischen zwei Leistungsanschlüssen (L$_1$, L$_1$'; L$_2$, L$_2$'; L$_3$, L$_3$'; L$_4$, L$_4$') verlaufende Laststrecke aufweisen, wobei die Laststrecken des ersten und zweiten Leistungsschalters (S$_1$, S$_2$) an einem ersten Schaltungsknoten (K$_1$) verbunden und die Laststrecken des dritten und vierten Leistungsschalters (S$_3$, S$_4$) an einem zweiten Schaltungsknoten (K$_2$) verbunden und jeweils in Reihe zwischen den Klemmen für eine Eingangsgleichspannung (U$_{ein}$) geschaltet sind, und mit einem Transformator (TR), dessen Primärwicklung (PW) mit den ersten und zweiten Schaltungsknoten (K$_1$, K$_2$) verbunden ist, und dessen Sekundärwicklung (SW) eine Vollbrückengleichrichteranordnung (GL) nachgeschaltet ist, welche aus einer Parallelschaltung eines ersten (GL1) und zweiten Gleichrichterzweigs (GL2) gebildet wird, wobei jeder der beiden Gleichrichterzweige aus einer Serienschaltung zweier Dioden (D1, D2, bzw. D3, D4) besteht, **dadurch gekennzeichnet,**

   **dass** an den zweiten Gleichrichterzweig (GL$_2$) der Vollbrückengleichrichteranordnung (GL) ein einzelner Kondensator (C$_K$) asymmetrisch angeschaltet ist, indem der Kondensator (C$_K$) den mittleren Knoten des zweiten Gleichrichterzweigs (GL$_2$) entweder mit der negativen oder positiven Ausgangsspannung der Vollbrückengleichrichteranordnung (GL) verbindet, und
   **dass** der zweite Gleichrichterzweig (GL$_2$) aus einfachen Dioden als langsam schaltende elektronische Schalter besteht während der erste Gleichrichterzweig (GL$_1$) aus Ultrafast- oder Schottky-Dioden (SD) als schnell schaltende elektronische Schalter besteht.

2. Spannungswandler nach Anspruch 1, **dadurch gekennzeichnet, dass** der Kondensator (C$_K$) über einen vorgeschalteten Schaltkontakt (SK) eines elektromechanischen oder elektronischen Schaltelements (Rel) von dem Gleichrichterzweig (GL$_2$) abtrennbar ist.

3. Spannungswandler nach Anspruch 1, **dadurch gekennzeichnet, dass** die ersten und zweiten Leistungsschalter (S$_1$, S$_2$) durch MOSFETs gebildet sind, und dass die dritten und vierten Leistungsschalter (S$_3$, S$_4$) durch IGBTs gebildet sind.

4. Spannungswandler nach Anspruch 1, **dadurch gekennzeichnet, dass** die durch IGBTs gebildeten dritten und vierten Leistungsschalter ($S_3$, $S_4$) dazu eingerichtet sind, in einem zumindest nahezu stromlosen Zustand geschaltet zu werden, und dass die durch MOSFETs gebildeten ersten und zweiten Leistungsschalter ($S_1$, $S_2$) dazu eingerichtet sind, in einem zunächst spannungslosen Zustand bei maximalem Stromfluss geschaltet zu werden.

5. Spannungswandler nach Anspruch 1 oder 2, **dadurch gekennzeichnet, dass** parallel zu den durch MOSFETs gebildeten ersten und zweiten Leistungsschaltern ($S_1$, $S_2$) jeweils eine durch zumindest einen Kondensator gebildete Kapazität ($C_1$, $C_2$) geschaltet ist.

6. Spannungswandler nach Anspruch 1 **dadurch gekennzeichnet, dass** der Spannungswandler dazu eingerichtet ist, zumindest zeitweise im diskontinuierlichen Modus betrieben zu werden.

**Claims**

1. Voltage converter for direct current with a circuit bridge, comprising a first, second, third and fourth power switch ($S_1$, $S_2$, $S_3$, $S_4$), which each have a control terminal ($G_1$, $G_2$, $G_3$, $G_4$) and in each case a load path running between two power terminals ($L_1$, $L_{1'}$; $L_2$, $L_{2'}$; $L_3$, $L_{3'}$; $L_4$, $L_{4'}$), the load paths of the first and second circuit breakers ($S_1$, $S_2$) being connected at a first switching node ($K_1$) and the load paths of the third and fourth circuit breakers ($S_3$, $S_4$) being connected to a second switching node ($K_2$) and each being connected in series between the terminals of a DC input voltage ($U_{ein}$), and having a transformer (TR) whose primary winding (PW) is connected to the first and second switching nodes ($K_1$, $K_2$), and whose secondary winding (SW) has a full-bridge rectifier arrangement (GL) connected downstream, which is formed by a parallel circuit of a first ($GL_1$) and second rectifier branch ($GL_2$), each of the two rectifier branches consisting of a series circuit of two diodes (D1, D2 or D3, D4),
   **characterized in that**

   a single capacitor ($C_K$) is connected asymmetrically to the second rectifier branch ($GL_2$) of the full-bridge rectifier arrangement (GL), **in that** the capacitor ($C_K$) connects the middle node of the second rectifier branch ($GL_2$) either to the negative or positive output voltage of the full-bridge rectifier arrangement (GL), and
   that the second rectifier branch ($GL_2$) consists of simple diodes as slow-switching electronic switches while the first rectifier branch ($GL_1$) consists of ultrafast or Schottky diodes (SD) as fast-switching electronic switches.

2. Voltage converter according to claim 1, **characterized in that** the capacitor ($C_K$) can be disconnected from the rectifier branch ($GL_2$) via an upstream switching contact (SK) of an electromechanical or electronic switching element (Rel).

3. Voltage converter according to claim 1, **characterized in that** said first and second power switches ($S_1$, $S_2$) are formed by MOSFETs, and that said third and fourth power switches ($S_3$, $S_4$) are formed by IGBTs.

4. Voltage converter according to claim 1, **characterized in that** the third and fourth power switches ($S_3$, $S_4$) formed by IGBTs are arranged to be switched in an at least almost currentless state, and **in that** the first and second power switches ($S_1$, $S_2$) formed by MOSFETs are arranged to be switched in an initially voltageless state at maximum current flow.

5. Voltage converter according to claim 1 or 2, **characterized in that** a capacitance ($C_1$, $C_2$) formed by at least one capacitor is connected in parallel with the first and second power switches ($S_1$, $S_2$) formed by MOSFETs.

6. Voltage transformer according to claim 1, **characterized in that** the voltage transformer is arranged to be operated at least temporarily in discontinuous mode.

**Revendications**

1. Convertisseur de tension pour courant continu avec un pont de circuit, comprenant un premier, un deuxième, un troisième et un quatrième commutateur de puissance ($S_1$, $S_2$, $S_3$, $S_4$), qui ont chacun une borne de commande ($G_1$, $G_2$, $G_3$, $G_4$) et chacun un circuit de charge entre deux bornes de puissance ($L_1$, $L_{1'}$ ; $L_2$, $L_{2'}$ ; $L_3$, $L_{3'}$ ; $L_4$, $L_{4'}$), les trajets de charge du premier et du deuxième disjoncteur ($S_1$, $S_2$) étant reliés à un premier noeud de commutation ($K_1$) et les trajets de charge du troisième et du quatrième disjoncteur ($S_3$, $S_4$) étant reliés à un deuxième noeud de

commutation ($K_2$) et étant montés respectivement en série entre les bornes pour une tension continue d'entrée ($U_{ein}$), et avec un transformateur (TR), dont l'enroulement primaire (PW) est relié aux premier et deuxième noeuds de commutation ($K_1$, $K_2$) et dont l'enroulement secondaire (SW) est suivi d'un dispositif redresseur en pont complet (GL) qui est formé d'un montage en parallèle d'une première ($GL_1$) et d'une deuxième branche de redresseur ($GL_2$), chacune des deux branches de redresseur étant constituée d'un montage en série de deux diodes (D1, D2 ou D4). D3, D4),

**caractérisé en ce que**

**en ce qu'**un condensateur unique ($C_K$) est connecté de manière asymétrique à la deuxième branche de redresseur ($GL_2$) du dispositif redresseur en pont complet (GL), le condensateur ($C_K$) reliant le noeud central de la deuxième branche de redresseur ($GL_2$) soit à la tension de sortie négative soit à la tension de sortie positive du dispositif redresseur en pont complet (GL), et **en ce que** la deuxième branche de redresseur ($GL_2$) est constituée de diodes simples en tant qu'interrupteurs électroniques à commutation lente, tandis que la première branche de redresseur ($GL_1$) est constituée de diodes ultra rapides ou Schottky (SD) en tant qu'interrupteurs électroniques à commutation rapide.

2.  Transformateur de tension selon la revendication 1, **caractérisé en ce que** le condensateur ($C_K$) peut être séparé de la branche de redresseur ($GL_2$) par un contact de commutation (SK) monté en amont d'un élément de commutation électromécanique ou électronique (Rel).

3.  Transformateur de tension selon la revendication 1, **caractérisé en ce que** les premier et deuxième commutateurs de puissance ($S_1$, $S_2$) sont formés par des MOSFET, et **en ce que** les troisième et quatrième commutateurs de puissance ($S_3$, $S_4$) sont formés par des IGBT.

4.  Transformateur de tension selon la revendication 1, **caractérisé en ce que** les troisième et quatrième commutateurs de puissance ($S_3$, $S_4$) formés par des IGBT sont adaptés pour être commutés dans un état au moins presque sans courant, et **en ce que** les premier et deuxième commutateurs de puissance ($S_1$, $S_2$) formés par des MOSFET sont adaptés pour être commutés dans un état initialement sans tension avec un flux de courant maximal.

5.  Transformateur de tension selon la revendication 1 ou 2, **caractérisé en ce qu'**une capacité ($C_1$, $C_2$) formée par au moins un condensateur est montée en parallèle avec les premier et deuxième commutateurs de puissance ($S_1$, $S_2$) formés par des MOSFET.

6.  Transformateur de tension selon la revendication 1, **caractérisé en ce que** le transformateur de tension est conçu pour fonctionner au moins temporairement en mode discontinu.

**Figur 1**

**Figur 2**

**Figur 3**

Figur 4    Stand der Technik

Figur 5    Stand der Technik

## Figur 6    Stand der Technik

# Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10227832 C1
- DE 102012023425 A1
- EP 1033806 A2
- JP 2006288134 A
- US 2003165070 A1

**In der Beschreibung aufgeführte Nicht-Patentliteratur**

- A novel type high-efficiency high-frequency-linked full-bridge DC-DC converter operating under secondary-side series resonant principle for high-power PV generation. **DAISUKE TSUKIYAMA et al.** RE-NEWABLE ENERGY RESEARCH AND APPLICATIONS (ICRERA), 2012 INTERNATIONAL CONFERENCE. IEEE, 11. November 2012, 1-6
- A Family of Novel Zero-Voltage and Zero-Current Switching Full Bridge Converters Using Output Voltage Reset for Fuel Cell Application. **WENSONG YU et al.** INDUSTRY APPLICATIONS CONFERENCE, 2007. 42ND IAS ANNUAL MEETING CONFERENCE RECORD OF THE 2007 EEE. IEEE, 01. September 2007, 622-627
- Hybrid Resonant and PWM Converter With High Efficiency and Full Soft-Switching Range. **WENSONG YU et al.** TRANSACTIONS ON POWER ELECTRONICS. INSTITUTE OF ELECTRICAL AND ELECTRONICS ENGINEERS, 01. Dezember 2012, vol. 27, 4925-4933
- Performance Evaluation of Bridgeless PFC Boost Rectifiers. **HUBER L et al.** IEEE TRANSACTIONS ON POWER ELECTRONICS. INSTITUTE OF ELECTRICAL AND ELECTRONICS ENGINEERS, 01. Mai 2008, vol. 23
- INSTITUTE OF ELECTRICAL AND ELECTRONICS ENGINEERS: "HIGH EFFICIENCY BOOST CONVERTERS FOR WIDE RANGE SINGLE-PHASE AC INPUT POWER FACTOR CORRECTION. 20TH INTERNATIONAL TELECOMMUNICATIONS ENERGY CONFERENCE. INTELEC, 04. Oktober 1998
- INTELEC. INTERNATIONAL TELECOMMUNICATIONS ENERGY CONFERENCE. IEEE, 04. Oktober 1998, 603-606